(19) Europäisches Patentamt
European Patent Office
Office européen des brevets

(11) Numéro de publication: **0 660 619 A1**

# (12) DEMANDE DE BREVET EUROPEEN

(21) Numéro de dépôt: **94203608.8**

(22) Date de dépôt: **13.12.94**

(51) Int. Cl.[6]: **H04N 11/04**, H04N 7/30

(30) Priorité: **22.12.93 FR 9315462**

(43) Date de publication de la demande:
**28.06.95 Bulletin 95/26**

(84) Etats contractants désignés:
**DE FR GB IT SE**

(71) Demandeur: **LABORATOIRES D'ELECTRONIOUE PHILIPS**
**22, Avenue Descartes**
**F-94450 Limeil-Brévannes (FR)**
(84) **FR**

(71) Demandeur: **PHILIPS ELECTRONICS N.V.**
**Groenewoudseweg 1**
**NL-5621 BA Eindhoven (NL)**
(84) **DE GB IT SE**

(72) Inventeur: **Fert, Etienne**
**Société Civile S.P.I.D.,**
**156, Boulevard Haussmann**
**F-75008 Paris (FR)**

(74) Mandataire: **Landousy, Christian**
**Société Civile S.P.I.D.**
**156, Boulevard Haussmann**
**F-75008 Paris (FR)**

## (54) Procédé de codage d'images à longueur variable et dispositif de mise en oeuvre d'un tel procédé.

(57) Un tel procédé comporte un étape de quantification (20) suivie d'une étape de codage à longueur variable (30) à la suite de laquelle les signaux obtenus sont enregistrés dans une mémoire tampon (40). Le pas de quantification utilisé est calculé à partir d'un paramètre aval qui est une fonction décroissante du taux d'occupation de la mémoire tampon, et d'un paramètre amont qui est une fonction de la quantité d'informations contenue dans l'image.

Selon l'invention, ledit paramètre amont comprend au moins un facteur multiplicatif qui est une fonction décroissante de la saturation de l'une des deux composantes de chrominance U ou V sur le bloc ou macrobloc courant par rapport au reste de l'image.

Application à la transmission et au stockage d'images.

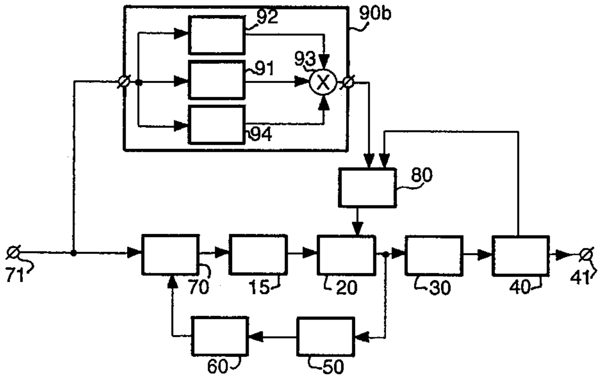


FIG. 2

EP 0 660 619 A1

L'invention concerne un procédé de codage d'images représentées par des signaux numériques organisés en blocs de luminance et de chrominance, eux-même éventuellement regroupés en macroblocs, comportant notamment:

- une première étape de quantification desdits signaux,
- une seconde étape de codage à longueur variable des signaux ainsi quantifiés, à la suite de laquelle les signaux codés sont enregistrés dans une mémoire tampon, le pas de quantification utilisé lors de la première étape étant calculé à partir d'une part d'un paramètre aval qui est une fonction décroissante du taux d'occupation de la mémoire tampon et d'autre part d'un facteur multiplicatif de correction sous la forme d'un paramètre amont qui est une fonction de la quantité d'informations contenue dans l'image.

Un tel procédé est conforme au projet de norme MPEG2 (Moving Pictures Expert Group) de l'ISO et a en particulier d'importantes applications dans les domaines de la transmission et du stockage d'images.

Le document publié par l'ISO sous la référence "ISO-IEC/JCT1/SC29/WG11; Test Model 4.2" au mois de février 1993, décrit un procédé de régulation du débit de sortie de la mémoire tampon. Il consiste à répartir, à l'intérieur de l'image, les variations du nombre d'éléments binaires alloués pour le codage de chaque bloc ou macrobloc, en fonction de la quantité d'informations contenue dans chaque bloc ou macrobloc par rapport à la moyenne. En effet, plus un bloc ou macrobloc contient d'informations, moins les défauts de codage sont apparents. Le pas de quantification peut alors être augmenté sans entraîner de perte de qualité trop importante. Au contraire, lorsqu'un bloc ou macrobloc contient très peu d'information, il est nécessaire de le quantifier finement pour éviter que cette information soit perdue.

La structure du codage MPEG est rappelée succinctement ci-dessous. Une image numérique peut être représentée par un ensemble de trois matrices contenant des nombres de huit bits : une matrice de luminance et deux matrices de chrominance. Ces matrices sont découpées en blocs de 8x8 éléments d'image de telle sorte que quatre blocs adjacents d'une matrice de luminance correspondent à un bloc dans chaque matrice de chrominance. Les six blocs ainsi obtenus forment un macrobloc. Le macrobloc est l'unité de base qui sert à l'estimation et à la compensation de mouvement, au choix du pas de quantification... Un en-tête de macrobloc comprend donc la valeur du pas de quantification utilisé pour le quantifier. Plusieurs macroblocs sont ensuite regroupés dans une tranche, plusieurs tranches forment une image, plusieurs images sont regroupées dans un groupe d'images ou GOP (de l'anglais Group Of Pictures) et plusieurs GOP forment une séquence. Un entête de séquence contient en particulier une matrice de quantification, de taille 8x8, utilisée pour quantifier chaque bloc de la séquence, lorsque cette matrice est nouvelle par rapport à celle utilisée dans la séquence précédente et qu'elle n'appartient pas à l'ensemble des matrices prédéfinies par la norme auquel cas il suffit d'indiquer celle qui est utilisée.

Un dispositif de codage permettant de mettre en oeuvre un procédé tel que décrit dans le document précité est représenté sur la figure 1. Il comprend en série, un module 15 de transformation DCT (de l'anglais Discrete Cosine Transform), un module 20 de quantification des coefficients DCT ainsi obtenus, un module 30 de codage à longueur variable des coefficients ainsi quantifiés, et une mémoire tampon 40 dont une première sortie est reliée à la sortie 41 du dispositif. Le dispositif comprend également, dans l'exemple décrit, une branche de prédiction, connectée à la sortie du module 20 de quantification et comportant un module de quantification inverse 50 et un module 60 de transformation inverse DCT dont la sortie est reliée à une première entrée d'un module de prédiction 70 lui même relié à l'entrée du module 15 de transformation DCT. Une seconde entrée de ce module de prédiction 70 est reliée à l'entrée 71 du dispositif. De plus, une seconde sortie de la mémoire tampon 40 est reliée à un module de régulation de débit 80 auquel elle fournit un paramètre aval lié à l'occupation de la mémoire tampon. D'autre part, l'entrée 71 du dispositif est reliée à l'entrée d'un module de pondération 90a dont la sortie est elle-même reliée au module de régulation 80 auquel il fournit un paramètre amont. La sortie du module de régulation 80 est reliée au module de quantification 20.

La branche de prédiction permet de ne pas coder la redondance temporelle contenue dans les images: le module de prédiction 70 évalue, pour chaque macrobloc entrant, un macrobloc de prédiction à partir des blocs des images précédemment transmises, qui sont ramenés à l'entrée du module de prédiction 70 après passage par le module de quantification inverse 50 et par le module de transformation DCT inverse 60. Puis il les compare pour déterminer s'il est plus intéressant de coder le macrobloc original ou la différence entre le macrobloc original et le macrobloc prédit. Le module 15 de transformation DCT traite des blocs de 8x8 éléments d'image. Une fois les coefficients DCT obtenus, ils sont quantifiés par le module de quantification 20 en fonction d'un pas de quantification fourni par le module de régulation 80. L'opération de quantification est la suivante :

$$C_{dctQi} = C_{dcti} / (W_i \, . \, Q2)$$

où $C_{dcti}$, $C_{dctQi}$, $W_i$, et Q2 sont respectivement le $i^{ème}$ coefficient issu de la transformation, sa valeur quantifiée, le $i^{ème}$ coefficient de la matrice de quantification W utilisée pour la séquence courante, et le pas de quantification utilisé. Ainsi, plus la valeur du pas de quantification Q2 est élevée, plus la quantification est grossière et moins les coefficients obtenus lors du décodage sont précis.

Les coefficients issus de la transformation étant quantifiés, ils sont ensuite codés par le module 30 de codage à longueur variable et fournis à la mémoire tampon 40. Pour réguler le débit de cette mémoire tampon 40 le module de régulation 80 fait varier, pour chaque macrobloc, le pas de quantification Q2 dont la valeur est transmise au décodeur dans l'en-tête du macrobloc. Cette variation est faite en fonction de deux paramètres.

Le paramètre aval, lié à l'occupation de la mémoire tampon 40, permet de calculer une première valeur Q1 du pas de quantification d'autant plus grande que l'occupation de la mémoire tampon est élevée. Un mode de calcul de Q1 est décrit dans le projet de norme précité.

Le paramètre amont, noté P, fourni par le module d'estimation 90a, permet au module de régulation 80 de modifier cette première valeur Q1 pour tenir compte du contenu de l'image. Le pas de quantification Q2 ainsi obtenu est égal à :

$$Q2 = Q1.P$$

Selon ce dispositif connu, le module de pondération 90a est constitué d'un module d'estimation 94 de la quantité d'informations contenues dans le macrobloc à coder par rapport à la moyenne calculée sur une image. Le paramètre amont fourni par ce module de pondération 90a est donc égal à un facteur $F_Y$, dit facteur de luminance, qui est d'autant plus faible que cette quantité d'informations est faible. Il s'exprime de la façon suivante:

$$P = F_Y = \frac{n_Y . a_Y + c_Y}{a_Y + n_Y . c_Y}$$

où $a_Y$, $c_Y$ et $n_Y$ sont respectivement la quantité d'information contenue dans le macrobloc, la quantité d'information moyenne contenue dans un macrobloc et calculée sur l'image précédente, et un paramètre fixe d' ajustement des limites de variation du pas de quantification ($Q1/n_Y < Q2 < n_Y.Q1$). La valeur de $n_Y$ est de préférence choisie proche de 2, ce qui permet d'obtenir une plage de variation assez large tout en maintenant une qualité d'images satisfaisante. La quantité d'information $a_Y$ contenue dans un macrobloc est modélisée par le minimum de la variance calculée sur chaque bloc d'un domaine D, constitué de préférence par le bloc ou macrobloc courant et par les blocs qui lui sont immédiatement contigus. La variance d'un bloc de luminance B est donnée par l'expression suivante :

$$Var(B) = \sum_{i,j} \left( x_{i,j} - \left( \frac{\sum_{i,j} x_{i,j}}{N} \right) \right)^2$$

où Var indique la variance, N représente le nombre d'éléments d'image contenus dans le bloc de luminance B, et $x_{i,j}$ leur luminance.

Ainsi, la quantité d'information $a_Y$ contenue dans un bloc ou macrobloc est égale à:

$$a_Y = 1 + Min_{B_k \in D} \left[ Var\ (B_k) \right]$$

où les $B_k$ sont les blocs du domaine D.

Toutefois, de nombreuses expériences de codage ont été réalisées sur différentes séquences de test, et il apparaît que le système visuel humain est particulièrement sensible aux défauts de codage localisés dans les zones de l'image où l'une des composantes de chrominance U ou V est fortement saturée.

Le but de la présente invention est de prendre en compte cette caractéristique du système visuel humain.

Pour cela, un procédé de codage selon l'invention et tel que défini dans le paragraphe introductif est caractérisé en ce que ledit paramètre amont comprend au moins un facteur multiplicatif, dit facteur de chrominance pour le bloc ou macrobloc courant, qui est une fonction décroissante de la saturation de l'une des deux composantes de chrominance U ou V sur le bloc ou macrobloc courant par rapport au reste de l'image.

Ainsi, il est possible de tenir compte du niveau de saturation de l'une des composantes de chrominance U ou V pour répartir le nombre d'éléments binaires alloués parmi les différents blocs ou macroblocs de l'image. Plus cette composante est saturée et plus il faudra utiliser un pas de quantification fin pour éviter l'apparition de défauts lors de la reconstruction de l'image.

Dans un autre mode de réalisation, ledit paramètre amont est constitué de deux facteurs multiplicatifs, dit respectivement facteur de chrominance U et facteur de chrominance V pour le bloc ou macrobloc courant, qui sont respectivement une fonction décroissante de la saturation de la composante de chrominance U et de la composante de chrominance V sur le bloc ou macrobloc courant par rapport au reste de l'image.

Il est ainsi possible d'affiner le paramètre amont utilisé en tenant compte du niveau de saturation des deux composantes de chrominance U et V.

De façon avantageuse, chaque facteur de chrominance pour un bloc ou macrobloc est obtenu à partir d'une expression du type:

$$\frac{n.a + c}{a + n.c} \text{ où:}$$

- *a* est une variable, dite complexité, qui est une fonction décroissante de la saturation de la composante de chrominance correspondante sur le bloc ou macrobloc courant,
- *c* est une valeur moyenne de la complexité *a* sur une image,
- *n* représente un paramètre d'ajustement des limites de variation dudit facteur de chrominance.

L'utilisation de la valeur moyenne de la composante de chrominance sur le bloc ou macrobloc permet ainsi de déterminer le niveau des composantes de chrominance V et/ou U de ce bloc ou macrobloc afin de lui attribuer une complexité d'autant plus faible que ce niveau est élevé.

De plus, dans un mode de réalisation particulièrement intéressant, la complexité *a* est donnée, pour chaque facteur de chrominance, par une expression du type $a = (g + 1) - |g - m|$ où:

- *m* représente la valeur moyenne de la composante de chrominance correspondante sur le bloc ou macrobloc courant,
- g représente la valeur de cette composante de chrominance correspondant à un pixel gris.

Ainsi, un bloc à dominante grise se verra attribuer une complexité proche du maximum (g + 1) et sera donc quantifié plus grossièrement qu'un bloc pour lequel la composante de chrominance V est largement saturée (proche de 0 ou de 2.g) qui se verra attribuer une complexité proche du minimum (1).

L'invention concerne également un dispositif de codage d'images permettant de mettre en oeuvre un procédé selon l'invention. Un tel dispositif comporte notamment:

- un module de quantification de signaux numériques correspondant à des images,
- un module de codage à longueur variable des signaux ainsi quantifiés,
- une mémoire tampon,
- et, intercalé entre la mémoire tampon et le module de quantification, un module de régulation du débit de sortie de la mémoire tampon, comportant des moyens pour modifier le pas de quantification à l'aide d'un paramètre aval qui est une fonction décroissante du taux d'occupation de la mémoire tampon et d'un facteur multiplicatif de correction sous la forme d'un paramètre amont qui est une fonction de la quantité d'informations contenue dans l'image et qui est fourni par un module de pondération.

Selon l'invention un tel dispositif est caractérisé en ce que ledit module de pondération comporte au moins un module d'estimation d'un facteur multiplicatif, dit facteur de chrominance pour le bloc ou macrobloc courant, qui est une fonction décroissante de la saturation de l'une des composantes de chrominance U ou V sur le bloc ou macrobloc courant par rapport au reste de l'image.

Dans un mode de réalisation avantageux d'un dispositif de codage selon l'invention, ledit module de pondération comprend en parallèle deux modules d'estimation de deux facteurs multiplicatifs dits respectivement facteur de chrominance U et facteur de chrominance V pour le bloc ou macrobloc courant, qui sont

respectivement une fonction décroissante de la saturation de la composante de chrominance U et de la composante de chrominance V sur le bloc ou macrobloc courant par rapport au reste de l'image, ainsi qu'un module multiplicateur desdits facteurs dont la sortie délivre ledit paramètre amont.

Enfin, dans un autre mode de réalisation avantageux, le module de pondération comportant un module d'estimation d'un facteur de luminance, qui représente la quantité d'informations contenue dans le bloc ou macrobloc de luminance par rapport à une valeur moyenne de cette quantité calculée sur une image, ledit module de pondération comporte un module multiplicateur desdits facteurs de luminance et de chrominance, la sortie dudit module multiplicateur délivrant ledit paramètre amont.

Ainsi la notion de quantité d'informations contenue dans le bloc ou macrobloc, déjà connue de l'art antérieur, est prise en compte dans le paramètre amont selon l'invention, ce qui permet d'obtenir des résultats particulièrement performants.

D'autres particularités, détails et avantages de la présente invention seront mis en évidence dans la description qui va suivre en regard des dessins annexés qui sont donnés à titre d'exemples non limitatifs et dans lesquels:

- la figure 1 est un schéma représentant un dispositif permettant de mettre en oeuvre un procédé de codage à longueur variable tel que décrit dans l'art antérieur,
- la figure 2 est un schéma représentant un dispositif de codage à longueur variable permettant de mettre en oeuvre un procédé selon l'invention.

La figure 2 décrit un mode de réalisation préférentiel du dispositif selon l'invention. Les références des éléments communs avec la figure 1 y sont inchangées.

D'après la figure 2, un dispositif de codage selon l'invention comporte des éléments 15 à 80 rigoureusement identiques à ceux décrits sur la figure 1. D'autre part, l'entrée 71 du dispositif selon l'invention est reliée à l'entrée d'un module de pondération 90b dont la sortie est elle-même reliée au module de régulation 80 auquel il fournit un paramètre amont. L'entrée du module de pondération 90b est reliée à:

- un module 91 d'estimation d'un facteur $F_V$ de chrominance V,
- un module 92 d'estimation d'un facteur $F_U$ de chrominance U,
- et un module 94 d'estimation d'un facteur $F_Y$ de luminance, identique à celui qui est décrit sur la figure 1.

Les sorties de ces trois modules d'estimation sont connectées à un module multiplicateur 93. Et la sortie de ce module multiplicateur constitue la sortie du module de pondération 90b.

Ainsi, dans cet exemple de réalisation, le paramètre amont, qui permet de modifier la première valeur Q1 du pas de quantification, est un produit de trois facteurs multiplicatifs $F_V$, $F_U$ et $F_Y$, fournis respectivement par les modules d'estimation 91, 92 et 94. Le pas de quantification Q2 ainsi obtenu est égal à:

$$Q2 = Q1.F_V.F_U.F_Y$$

Le facteur $F_V$ de chrominance V est donné par l'expression suivante:

$$F_V = \frac{n_V.a_V + c_V}{a_V + n_V.c_V} \text{ où:}$$

- $a_v$ est une variable, dite complexité, égale à:

  $$a_v = (g + 1) - |g - m_v|$$

  où $m_v$ représente la valeur moyenne de la composante de chrominance V sur le bloc ou macrobloc courant, et g représente la valeur de cette composante de chrominance correspondant à un pixel gris.
- $c_v$ est une valeur moyenne de la complexité $a_v$ sur l'image précédente de préférence,
- $n_v$ représente un paramètre d'ajustement des limites de variation de ce facteur de chrominance V.

Dans la pratique, le niveau gris correspond à une valeur numérique g de la composante égale à 128, et la composante de chrominance V est d'autant plus saturée que sa valeur numérique est proche de 0 ou de 256. Ainsi, lorsque sur le bloc ou macrobloc courant, la composante de chrominance V est fortement saturée (c'est-à-dire proche de 0 ou de 256) la complexité $a_v$ est faible (c'est-à-dire proche de 1). Au contraire, lorsque cette composante est proche du niveau gris, elle est élevée (c'est-à-dire proche de la valeur maximum 129). Donc la complexité attribuée à un bloc ou macrobloc est d'autant plus faible que la

composante de chrominance V est en moyenne proche de la saturation. Le paramètre amont est alors d'autant plus faible et la quantification plus fine: les zones de l'image dans lesquelles la composante de chrominance V est fortement saturée sont codées plus finement.

Dans un mode de réalisation particulièrement avantageux, le paramètre $n_V$ d'ajustement des limites de variation du facteur $F_V$ de chrominance V est choisi égal à 8 de façon à lui donner un poids suffisant dans le paramètre amont.

Le facteur $F_U$ de chrominance U est fourni par le bloc 92 de façon similaire, et il permet de prendre en compte le niveau de la composante de chrominance U dans le bloc ou macrobloc à coder. Ainsi,

$$F_U = \frac{n_U . a_U + c_U}{a_U + n_U . c_U} \text{ où:}$$

- la complexité $a_U$ est donnée par une expression du type $a_U = (g + 1) - |g - m_U|$, $m_U$ représentant la valeur moyenne de la composante de chrominance U sur le bloc ou macrobloc courant, et g représentant la valeur de cette composante de chrominance correspondant à un pixel gris,
- $c_U$ est une valeur moyenne de la complexité $a_U$ sur une image,
- $n_U$ représente un paramètre d'ajustement des limites de variation de ce facteur de chrominance U, avantageusement égal à 8 lui aussi.

Il va de soi que des modifications peuvent être apportées au modes de réalisation qui vient d'être décrit, notamment par substitution de moyens techniques équivalents, sans que l'on sorte pour cela du cadre de l'invention.

En particulier, il serait possible d'utiliser d'autres modélisations mathématiques des facteurs de chrominance et de luminance, de la complexité et de la quantité d'informations contenue dans un bloc ou macrobloc. De même les paramètres d'ajustement des limites de variation de ces différents facteurs pourraient prendre d'autres valeurs.

De plus dans un autre mode de réalisation, il est possible de ne tenir compte dans le paramètre amont que du niveau de saturation d'une des deux composantes de chrominance V ou U, ou également de ne tenir compte que du niveau de saturation des deux composantes de chrominance, ou encore d'une des deux composantes de chrominance V ou U et de la quantité d'informations contenue dans chaque bloc ou macrobloc.

Toutefois, l'oeil étant particulièrement sensible aux défauts de codage localisés dans les zones où la composante de chrominance V est fortement saturée, l'utilisation de la composante de chrominance V dans le calcul du paramètre amont améliorera plus sensiblement les résultats que l'utilisation de la composante U.

Enfin, et bien que le procédé décrit comprenne une étape de transformation DCT, l'invention est indépendante du fait que le procédé comprenne ou non une étape de transformation préalable, ainsi que de la nature de cette transformation lorsqu'elle existe.

## Revendications

**1.** Procédé de codage d'images représentées par des signaux numériques organisés en blocs de luminance et de chrominance, eux-même éventuellement regroupés en macroblocs, comportant notamment:
   - une première étape de quantification desdits signaux,
   - une seconde étape de codage à longueur variable des signaux ainsi quantifiés, à la suite de laquelle les signaux codés sont enregistrés dans une mémoire tampon,

   le pas de quantification utilisé lors de la première étape étant calculé à partir d'une part d'un paramètre aval qui est une fonction décroissante du taux d'occupation de la mémoire tampon et d'autre part d'un facteur multiplicatif de correction sous la forme d'un paramètre amont qui est une fonction de la quantité d'informations contenue dans l'image,

   caractérisé en ce que ledit paramètre amont comprend au moins un facteur multiplicatif, dit facteur de chrominance pour le bloc ou macrobloc courant, qui est une fonction décroissante de la saturation de l'une des deux composantes de chrominance U ou V sur le bloc ou macrobloc courant par rapport au reste de l'image.

**2.** Procédé de codage d'images selon la revendication 1, caractérisé en ce que ledit paramètre amont est constitué de deux facteurs multiplicatifs, dit respectivement facteur de chrominance U et facteur de chrominance V pour le bloc ou macrobloc courant, qui sont respectivement une fonction décroissante de la saturation de la composante de chrominance U et de la composante de chrominance V sur le bloc ou macrobloc courant par rapport au reste de l'image.

**3.** Procédé de codage d'images selon l'une des revendications 1 ou 2, caractérisé en ce que chaque facteur de chrominance pour un bloc ou macrobloc est obtenu à partir d'une expression du type:

$$\frac{n.a + c}{a + n.c} \text{ où:}$$

- *a* est une variable, dite complexité, qui est une fonction décroissante de la saturation de la composante de chrominance correspondante sur le bloc ou macrobloc courant,
- *c* est une valeur moyenne de la complexité *a* sur une image,
- *n* représente un paramètre d'ajustement des limites de variation dudit facteur de chrominance.

**4.** Procédé de codage d'images selon la revendication 3, caractérisé en ce que, pour chaque facteur de chrominance, la complexité *a* est donnée par une expression du type

$a = (g + 1) - |g - m|$ où:

- *m* représente la valeur moyenne de la composante de chrominance correspondante sur le bloc ou macrobloc courant,
- *g* représente la valeur de cette composante de chrominance correspondant à un pixel gris.

**5.** Procédé de codage d'images selon l'une des revendications 3 ou 4, caractérisé en ce que la valeur moyenne de la complexité est calculée sur l'image précédant l'image courante.

**6.** Dispositif de codage d'images représentées par des signaux numériques organisés en blocs de luminance et de chrominance, eux-même éventuellement regroupés en macroblocs, comportant notamment:

- un module de quantification (20) desdits signaux,
- un module de codage à longueur variable (30) des signaux ainsi quantifiés,
- une mémoire tampon (40),
- et, intercalé entre la mémoire tampon (40) et le module de quantification (20), un module (80) de régulation du débit de sortie de la mémoire tampon (40), comportant des moyens pour modifier le pas de quantification à l'aide d'un paramètre aval qui est une fonction décroissante du taux d'occupation de la mémoire tampon et d'un facteur multiplicatif de correction sous la forme d'un paramètre amont qui est une fonction de la quantité d'informations contenue dans l'image et qui est fourni par un module de pondération (90b),
  caractérisé en ce que ledit module de pondération (90b) comporte au moins un module (91 ou 92) d'estimation d'un facteur multiplicatif, dit facteur de chrominance pour le bloc ou macrobloc courant, qui est une fonction décroissante de la saturation de l'une des composantes de chrominance U ou V sur le bloc ou macrobloc courant par rapport au reste de l'image.

**7.** Dispositif de codage d'images selon la revendication 6, caractérisé en ce que ledit module de pondération (90b) comprend en parallèle deux modules d'estimation (91, 92) de deux facteurs multiplicatifs dits respectivement facteur de chrominance U et facteur de chrominance V pour le bloc ou macrobloc courant, qui sont respectivement une fonction décroissante de la saturation de la composante de chrominance U et de la composante de chrominance V sur le bloc ou macrobloc courant par rapport au reste de l'image, ainsi qu'un module multiplicateur desdits facteurs dont la sortie délivre ledit paramètre amont.

**8.** Dispositif de codage d'images selon l'une des revendications 6 ou 7, caractérisé en ce que chaque module d'estimation (91, 92) de facteur de chrominance comprend des moyens de calcul d'une

expression du type

$$\frac{n.a + c}{a + n.c} \text{ où:}$$

- *a* est une variable, dite complexité, qui est une fonction décroissante de la saturation de la composante de chrominance correspondante sur le bloc ou macrobloc courant,
- *c* est une valeur moyenne de la complexité *a* sur une image,
- *n* représente un paramètre d'ajustement des limites de variation dudit facteur de chrominance.

**9.** Dispositif de codage d'image selon la revendication 8, caractérisé en ce que, pour chaque facteur de chrominance, la complexité *a* est donnée par une expression du type

$a = (g + 1) - |g - m|$ où:

- *m* représente la valeur moyenne de la composante de chrominance correspondante sur le bloc ou macrobloc courant,
- g représente la valeur de cette composante de chrominance correspondant à un pixel gris.

**10.** Dispositif de codage d'images selon l'une des revendications 8 ou 9, caractérisé en ce que la valeur moyenne de la complexité est calculée sur l'image précédant l'image courante.

**11.** Dispositif de codage d'images selon l'une des revendications 6 à 10, dont le module de pondération (90b) comporte un module (94) d'estimation d'un facteur de luminance, qui représente la quantité d'informations contenue dans le bloc ou macrobloc de luminance par rapport à une valeur moyenne de cette quantité calculée sur une image, caractérisé en ce que ledit module de pondération (90b) comporte un module multiplicateur (93) desdits facteurs de luminance et de chrominance, la sortie dudit module multiplicateur délivrant ledit paramètre amont.

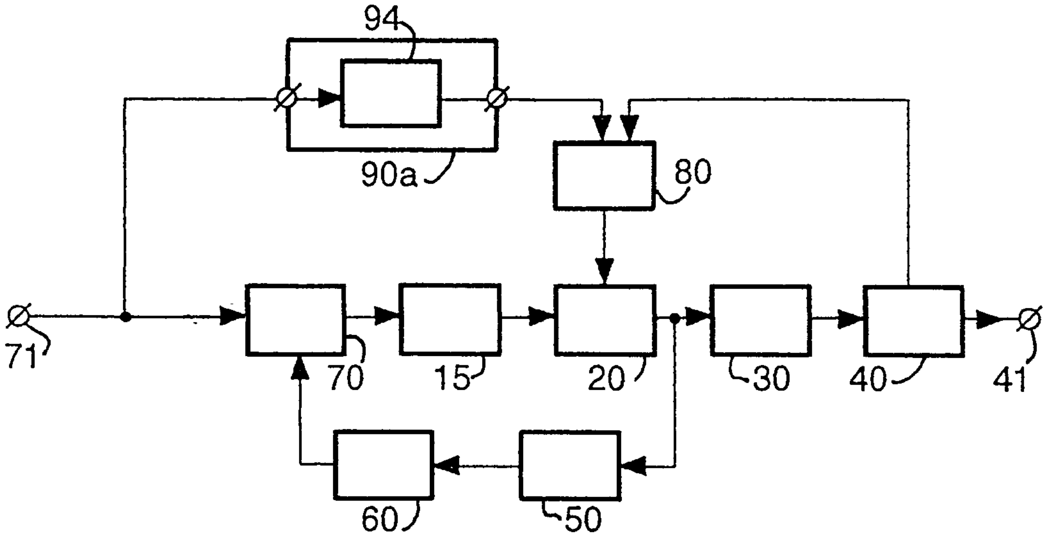
94
90a
80
71
70
15
20
30
40
41
60
50

FIG. 1

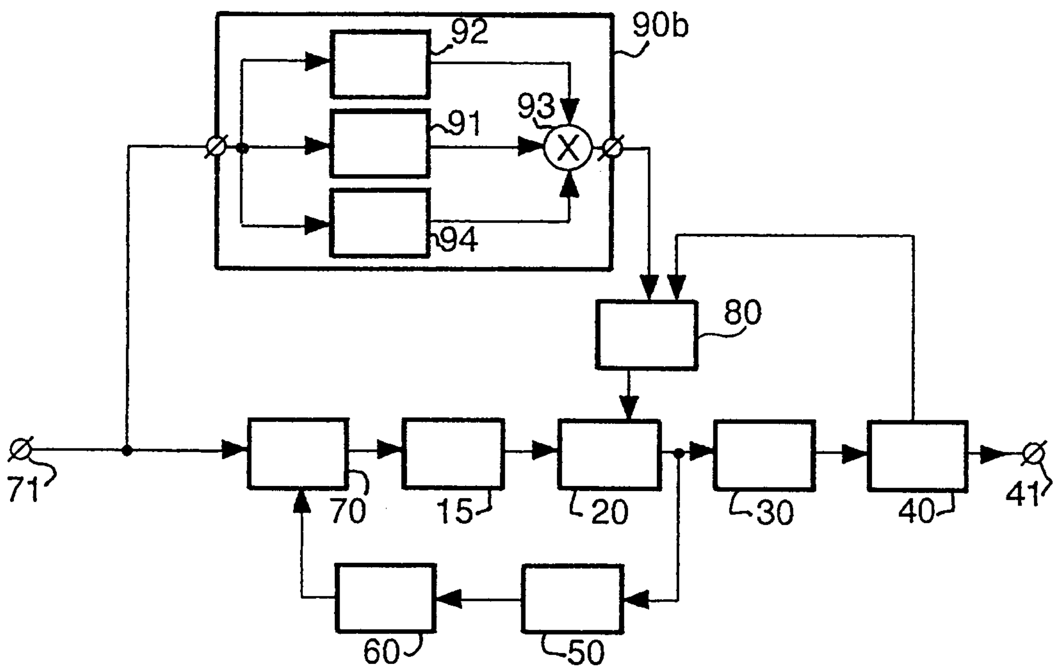
92
90b
93
91
94
80
71
70
15
20
30
40
41
60
50

FIG. 2

Office européen des brevets

# RAPPORT DE RECHERCHE EUROPEENNE

Numero de la demande
EP 94 20 3608

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X<br>A | EP-A-0 510 921 (CANON KABUSHIKI KAISHA)<br>* page 2, ligne 11 - page 3, ligne 5 *<br>* page 3, ligne 40 - page 5, ligne 33 *<br>--- | 1,2,6,7<br>3-5,8-11 | H04N11/04<br>H04N7/30 |
| X<br><br>A | EP-A-0 322 058 (LA RADIOTECHNIQUE PORTENSEIGNE)<br>* le document en entier *<br>--- | 1,6<br><br>2-5,7-11 | |
| X<br>A | EP-A-0 535 960 (KABUSHIKI KAISHA TOSHIBA)<br>* colonne 2, ligne 35 - colonne 3, ligne 6 *<br>* colonne 5, ligne 13 - colonne 7, ligne 32 *<br>--- | 1,6<br>2-5,7-11 | |
| P,A | EP-A-0 580 101 (MATSUSHITA ELECTRIC INDUSTRIAL)<br>* le document en entier *<br>--- | 1-11 | |
| A | GB-A-2 266 635 (SONY UK)<br>* page 4, ligne 20 - ligne 29 *<br>* page 13, ligne 12 - page 15, ligne 13 *<br>--- | 1-11 | **DOMAINES TECHNIQUES RECHERCHES (Int.Cl.6)** |
| A | EP-A-0 535 963 (MATSUSHITA ELECTRIC INDUSTRIAL CO.)<br>* colonne 5, ligne 26 - colonne 7, ligne 20 *<br>--- | 1-11 | H04N |
| A | US-A-5 237 410 (INOUE)<br>--- | | |
| A | EP-A-0 323 362 (THOMSON GRAND PUBLIC)<br>--- | | |
| A | EP-A-0 310 175 (LABORATOIRES D'ELECTRONIQUE ET DE PHYSIQUE APPLIQUEE)<br>----- | | |

Le présent rapport a été établi pour toutes les revendications

| Lieu de la recherche | Date d'achèvement de la recherche | Examinateur |
|---|---|---|
| LA HAYE | 20 Février 1995 | Poirier, J-M |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)